# EUROPEAN PATENT APPLICATION

(11) **EP 3 578 920 A1**
(43) Date of publication of application: **11.12.2019**
(21) Application number: 18747409.3
(22) Date of filing: 31.01.2018
(51) Int. Cl.: G01C 21/28, G08G 1/0969

(54) **INFORMATION PROCESSING DEVICE, SERVER DEVICE, INFORMATION PROCESSING SYSTEM, INFORMATION PROCESSING METHOD, AND PROGRAM**

(30) Priority: 31.01.2017 JP 2017016007
(71) Applicant: Pioneer Corporation, Tokyo 113-0021 (JP)
(72) Inventor: NAGATA, Hiroshi, Kawagoe-shi, Saitama 350-8555 (JP); KURAHASHI, Makoto, Kawagoe-shi, Saitama 350-8555 (JP); GOTODA Akira,, Kawagoe-shi, Saitama 350-8555 (JP)
(74) Representative: Vossius & Partner Patentanwälte Rechtsanwälte mbB
(86) International application number: PCT/JP2018/003110
(87) International publication number: WO 2018/143237

(57) **Abstract**

An information processing apparatus (10) includes a calculation unit (12) and a process execution unit (14). The calculation unit (12) calculates a probability distribution of an estimation position of a vehicle by using information and map data, the information including at least one of a detection result of a target object in a vicinity of the vehicle, positioning information received from a positioning satellite, and information of an inertial measurement unit (IMU) . In a case where accuracy of the estimation position of the vehicle based on the probability distribution calculated by the calculation unit (12) is lower than a predetermined reference, the process execution unit (14) executes at least one predetermined process for improving accuracy of a position estimation process.

## Description

### TECHNICAL FIELD

The present invention relates to an information processing apparatus, a server apparatus, an information processing system, an information processing method, and a program.

### BACKGROUND ART

Patent Document 1 discloses an example of a technology of recognizing a position of an own vehicle. Patent Document 1 discloses the technology in which information (landmark information) related to a landmark along a road detected by using a camera or a radar is detected, and pieces of detected landmark information are selectively fused so as to estimate the position of the vehicle.

### RELATED DOCUMENT

### PATENT DOCUMENT

[Patent Document 1] Japanese Unexamined Patent Publication No. 2016-14647

### SUMMARY OF THE INVENTION

### TECHNICAL PROBLEM

In a case of estimating a position of a vehicle by using information collected by various sensors or the like, there is a possibility that accuracy of a position estimation process is reduced due to various environmental factors. It is desirable to devise a measure for preventing the accuracy of the position estimation process from being reduced.

As one example of the problem to be solved by the present invention, there is a technology of preventing accuracy of a position estimation process of an own vehicle from being reduced or a technology of causing the vehicle to perform a safe drive in a case where the accuracy of the position estimation process of the own vehicle is reduced.

### SOLUTION TO PROBLEM

According to the invention described in claim 1, there is provided an information processing apparatus including: a calculation unit that calculates a probability distribution of an estimation position of a vehicle by using information and map data, the information including at least one of a detection result of a target object in a vicinity of the vehicle, positioning information received from a positioning satellite, and information of an inertial measurement unit (IMU); and a process execution unit that executes at least one predetermined process in a case where accuracy of the estimation position of the vehicle based on the probability distribution is lower than a predetermined reference.

According to the invention described in claim 10, there is provided a server apparatus including: an obtaining unit that obtains first information including position information of a position at which accuracy of an estimation position of a vehicle is lower than a predetermined reference, from an information processing apparatus disposed in the vehicle; and an output unit that outputs information indicating a position at which an obtainment frequency of the first information is equal to or larger than a reference, by using position information included in the first information.

According to the invention described in claim 16, there is provided an information processing system including: the information processing apparatus according to any one of claims 2 to 6; and the server apparatus according to any one of claims 10 to 15.

According to the invention described in claim 17, there is provided an information processing method of a computer, the method including: a step of calculating a probability distribution of an estimation position of a vehicle by using information and map data, the information including at least one of a detection result of a target object in a vicinity of the vehicle, positioning information received from a positioning satellite, and information of an inertial measurement unit (IMU); and a step of executing at least one predetermined process in a case where accuracy of the estimation position of the vehicle based on the probability distribution is lower than a predetermined reference.

According to the invention described in claim 18, there is provided an information processing method of a computer, the method including: a step of obtaining first information including position information of a position at which accuracy of an estimation position of a vehicle is lower than a predetermined reference, from another computer disposed in the vehicle; and a step of outputting information indicating a position at which an obtainment frequency of the first information is equal to or larger than a reference, by using position information included in the first information.

According to the invention described in claim 19, there is provided a program causing a computer to function as: a unit that calculates a probability distribution of an estimation position of a vehicle by using information and map data, the information including at least one of a detection result of a target object in a vicinity of the vehicle, positioning information received from a positioning satellite, and information of an inertial measurement unit (IMU); and a unit that executes at least one predetermined process in a case where accuracy of the estimation position of the vehicle based on the probability distribution is lower than a predetermined reference.

According to the invention described in claim 20, there is provided a program causing a computer to function as: a unit that obtains first information including position information of a position at which accuracy of an estimation position of a vehicle is lower than a predetermined reference, from another computer disposed in the vehicle; and a unit that outputs information indicating a position at which an obtainment frequency of the first information is equal to or larger than a reference, by using position information included in the first information.

### BRIEF DESCRIPTION OF THE DRAWINGS

The above objects and other objects, features and advantages will become more apparent from the following description of the preferred embodiments and the accompanying drawings.

Fig. 1 is a block diagram conceptually illustrating a functional configuration of an information processing apparatus.
Fig. 2 is a diagram illustrating a hardware configuration of the information processing apparatus.
Fig. 3 is a flowchart illustrating a first example of an operation of the information processing apparatus.
Fig. 4 is a flowchart illustrating a flow of a first predetermined process.
Fig. 5 is a flowchart illustrating a flow of a second predetermined process.
Fig. 6 is a flowchart illustrating a flow of a third predetermined process.
Fig. 7 is a flowchart illustrating a flow of a fourth predetermined process.
Fig. 8 is a flowchart illustrating a second example of the operation of the information processing apparatus.
Fig. 9 is a block diagram illustrating a configuration example of an information processing system according to a second example embodiment.
Fig. 10 is a diagram illustrating a hardware configuration of the information processing apparatus and a server apparatus.
Fig. 11 is a flowchart illustrating a first example of an operation of an information processing apparatus according to the second example embodiment.
Fig. 12 is a flowchart illustrating a second example of the operation of the information processing apparatus according to the second example embodiment.
Fig. 13 is a flowchart illustrating an example of an operation of the server apparatus.
Fig. 14 is a flowchart illustrating another example of the operation of the server apparatus.

### DESCRIPTION OF EMBODIMENTS

Hereinafter, example embodiments according to the present invention will be described by using the drawings. In all of the drawings, the same components are denoted by the same reference numerals, and description thereof is not repeated as appropriate. In addition, unless otherwise described, in each of block diagrams, each of blocks represents not a hardware unit but a functional unit configuration.

### First Example Embodiment

### (Functional Configuration Example of Information Processing Apparatus 10)

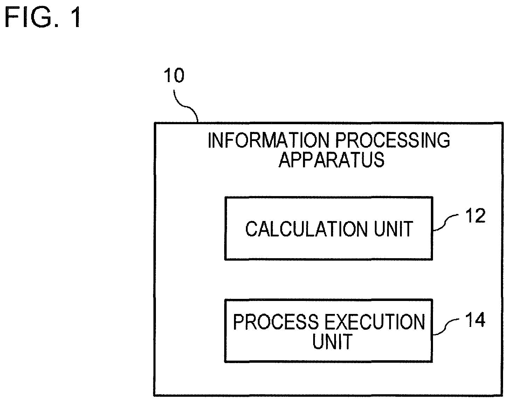

Fig. 1 is a block diagram conceptually illustrating a functional configuration of an information processing apparatus 10. As illustrated in Fig. 1, the information processing apparatus 10 includes a calculation unit 12 and a process execution unit 14.

The calculation unit 12 calculates a probability distribution of an estimation position of a vehicle by using information and map data, the information including at least one of a detection result of a target object (a landmark) in a vicinity of the vehicle, positioning information (for example, global positioning system (GPS) information) received from a positioning satellite, and information of an inertial measurement unit (hereinafter, referred to IMU). Although the IMU does not indicate the position by itself, it is possible to estimate a position at a time t by calculating information of the IMU (acceleration information and angular velocity information) up to the time t at a known position. In a case of using the detection result of the landmark and the information of the IMU, the calculation unit 12 can calculate the probability distribution of the estimation position of the vehicle by a method using Bayesian estimation such as a Kalman filter or a particle filter, for example. In addition, in a case of using GPS information as the positioning information received from the positioning satellite, for example, the calculation unit 12 can calculate the probability distribution of the estimation position of the vehicle based on a reception status (for example, arrangement of satellites transmitting GPS signals and the number of GPS signals received from each of the satellites) of a GPS signal, receive sensitivity of the GPS signal, or the like.

Here, the map data includes information on a road and a landmark provided in the vicinity of the road (hereinafter, also referred to as "landmark information"). The landmark information includes at least identification information for uniquely identifying each of landmarks and position information (position coordinates) of the landmark. A specific example of the landmark includes features such as a kilometer post, a 100 m post, a delineator, a transportation infrastructure (for example, a sign, a direction sign, a signal, or the like), a telephone pole, a streetlight, and the like. However, the landmark may be used as long as the landmark can be utilized for position estimation of a vehicle, and is not limited to the example described here.

The process execution unit 14 executes at least one predetermined process in a case where accuracy of an estimation position of the vehicle based on a probability distribution is lower than a predetermined reference. The process execution unit 14 can determine "accuracy of an estimation position of a vehicle based on a probability distribution" based on, for example, a variance, a standard deviation, a mode, and the like of the probability distribution calculated by the calculation unit 12. Note that, the predetermined process executed here is a process for improving the accuracy of the estimation position of the vehicle, or a process for improving safety during traveling of the vehicle. A specific example of the predetermined process will be described below.

As described above, in the present example embodiment, certainty of the estimation position of the vehicle is determined based on the probability distribution of the estimation position of the vehicle. In a case where a degree of the certainty of the estimation position of the vehicle is lower than a predetermined reference, the process for improving the certainty or the process for improving the safety of the traveling of the vehicle is executed. Accordingly, it is possible to prevent the accuracy of the position estimation process of the vehicle from being reduced or to control the vehicle more safely.

### (Specific Example)

Hereinafter, a first example embodiment will be described in detail by using a specific example.

### <Hardware Configuration>

Each of functional configuration units of the information processing apparatus 10 may be realized by hardware (for example, hard-wired electronic circuit or the like) which realizes each of the functional configuration units or may be realized by a combination (for example, a combination of the electronic circuit and a program controlling the electronic circuit or the like) of hardware and software. Hereinafter, a case where each of the functional configuration units in the information processing apparatus 10 is realized by a combination of hardware and software will be further described.

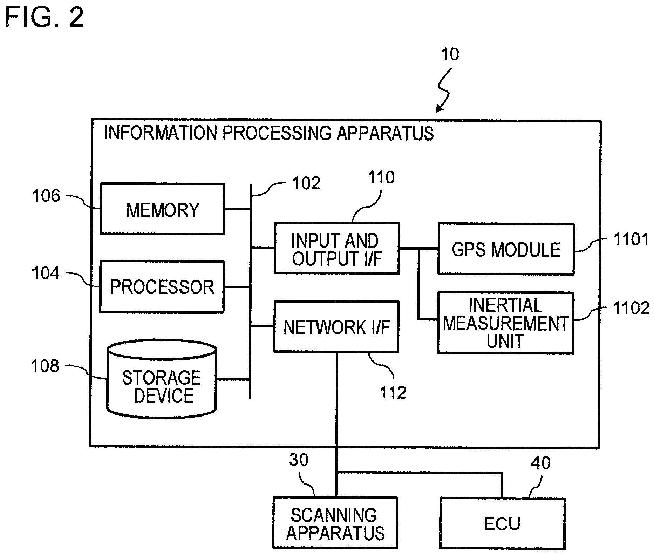

Fig. 2 is a diagram illustrating a hardware configuration of the information processing apparatus 10. The information processing apparatus 10 includes a bus 102, a processor 104, a memory 106, a storage device 108, an input and output interface 110, and a network interface 112. The bus 102 is a data transmission line through which the processor 104, the memory 106, the storage device 108, the input and output interface 110, and the network interface 112 mutually transmit and receive data. However, a method of connecting the processors 104 and the like to each other is not limited to bus connection. The processor 104 is an arithmetic processing unit realized by using a microprocessor or the like. The memory 106 is a memory realized by using a random access memory (RAM) or the like. The storage device 108 is a storage device realized by using a read only memory (ROM), a flash memory, or the like.

The input and output interface 110 is an interface for connecting the information processing apparatus 10 to a peripheral apparatus. For example, a GPS module 1101 which receives a GPS signal from a satellite and generates GPS information, an inertial measurement unit 1102 which generates information indicating angular velocity and acceleration of a vehicle, or the like is connected to the input and output interface 110. Note that, the inertial measurement unit 1102 can generate information indicating angular velocity and acceleration of a vehicle by using a gyro sensor or the like, for example. In addition, various input apparatuses which receive input operations from a user, a display apparatus, a touch panel in which the input apparatus and the display apparatus are integrated, or the like may be further connected to the input and output interface 110.

The network interface 112 is an interface for connecting the information processing apparatus 10 to a communications network. The information processing apparatus 10 may have a plurality of network interfaces 112. For example, the information processing apparatus 10 includes the network interface 112 for connecting to a CAN communication network, and the network interface 112 for connecting to a wide area network (WAN) communication network. For example, the information processing apparatus 10 can communicate with a scanning apparatus 30 and an external server apparatus (not illustrated) or a peripheral base station through the WAN communication network. The scanning apparatus 30 is an apparatus which is disposed inside or outside a vehicle and scans a vicinity of the vehicle. The scanning apparatus 30 is, for example, light detection and ranging (LIDAR) or radio detection and ranging (RADAR) . In addition, the scanning apparatus 30 may be an apparatus including a charged coupled device (CCD) image sensor or a completed complementary metal oxide semiconductor (CMOS) image sensor. That is, the scanning apparatus 30 functions as an external sensor which senses an external environment of the vehicle. Further, the information processing apparatus 10 can communicate with an ECU 40 or the like of the vehicle through the CAN communication network, and can obtain various control signals for controlling an operation of the vehicle. In addition, the information processing apparatus 10 may obtain position information of the peripheral base station through the network interface 112, and may correct GPS information generated by the GPS module 1101 by using the position information of the peripheral base station.

The storage device 108 stores a program module which realizes each of the functional configuration units of the information processing apparatus 10. By reading the program module into the memory 106 and executing the program module, the processor 104 realizes a function of each of the functional configuration units of the information processing apparatus 10.

### (Operation Example)

Hereinafter, a specific operation example of the information processing apparatus 10 will be described with reference to the drawings.

### <First Operation Example>

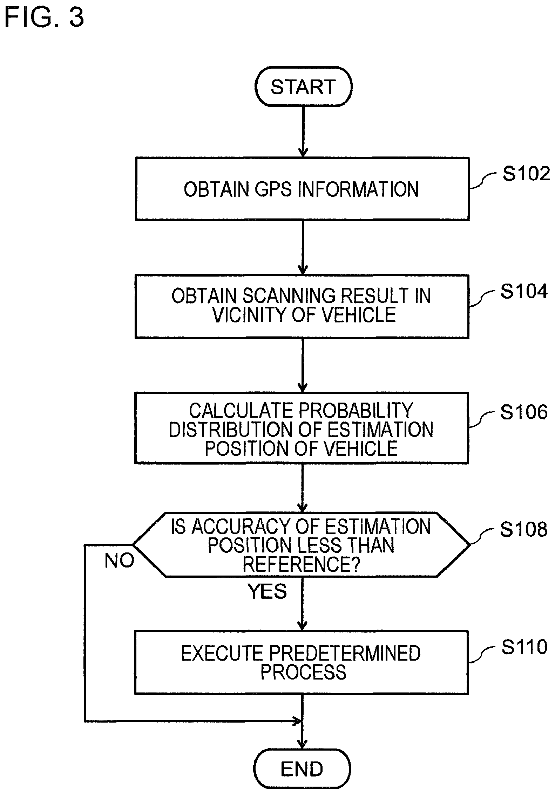

Fig. 3 is a flowchart illustrating a first example of an operation of the information processing apparatus 10. Here, an example in which the information processing apparatus 10 estimates a position of a vehicle by mainly using a detection result of a landmark is described.

First, the GPS module 1101 receives GPS signals from a plurality of satellites, and generates position information (GPS information) based on the received GPS signals. The calculation unit 12 obtains the GPS information generated by the GPS module 1101 (S102).

In addition, the scanning apparatus 30 disposed in a vehicle scans a vicinity of the vehicle. For example, the scanning apparatus 30 emits an electromagnetic wave (light or a millimeter wave) within a predetermined angular range in a horizontal direction and a vertical direction and detects a reflected wave reflected by an object which exists in the vicinity so as to measure a distance and a direction to the object. In addition, the scanning apparatus 30 can recognize the object existing in the vicinity of the vehicle by analyzing image data in the vicinity of the vehicle generated by using a CCD image sensor or a CMOS image sensor (for example, feature value matching or the like). Further, the scanning apparatus 30 can calculate a distance to the recognized object by using, for example, a time of flight (TOF) method or the like. In addition, the scanning apparatus 30 can generate information indicating a direction of the recognized object, based on a position of a pixel corresponding to the recognized object, for example. The calculation unit 12 obtains a scanning result generated by the scanning apparatus 30 (S104).

Note that, an execution order of S102 and S104 may be reversed, or may be performed in parallel.

The calculation unit 12 calculates a probability distribution of an estimation position of an own vehicle (S106). For example, as described below, the calculation unit 12 can calculate the probability distribution of the estimation position of the own vehicle.

### <Calculation Example of Probability Distribution Using Only Detection Result of Landmark>

First, the calculation unit 12 calculates a probability distribution of an estimation position of an own vehicle at a time t, based on a probability distribution of an estimation position of the own vehicle at a time t-1 and control information (information on moving velocity and angular velocity of the vehicle) on an operation of the vehicle. In detail, the calculation unit 12 applies the control information of the vehicle and a predetermined noise parameter (a parameter obtained by modeling an error between the control information of the vehicle and an actual operation of the vehicle) to the probability distribution of the estimation position of the own vehicle at the time t-1 so as to calculate an error distribution (a probability distribution) of the estimation position of the own vehicle at the time t. Note that, the calculation unit 12 can obtain the number of revolutions per unit time of a wheel detected by an axle sensor or the like through a control area network (CAN) or the like and can convert the number of revolutions of the wheel into moving velocity of the vehicle, for example. In addition, the calculation unit 12 can also obtain angular velocity and acceleration of the vehicle detected by using, for example, the inertial measurement unit 1102 or the like.

The calculation unit 12 identifies each of landmarks corresponding to the object detected in the scanning in S104, based on the probability distribution of the estimation position of the vehicle at the time t and position information of each of landmarks on map data. The calculation unit 12 can identify each of the landmarks corresponding to the object detected in the scanning in S104, for example, as described below. Assuming that the probability distribution of the estimation position of the vehicle at the time t calculated as described above is correct, the calculation unit 12 can estimate a predicted value of a distance and a direction of each of landmarks detected by the scanning of the scanning apparatus 30 at the time t by further using the position information of each of the landmarks included in the map data. For example, by using position information at a position having the highest probability determined by the probability distribution at the time t calculated as described above and the position information of each of the landmarks included in the map data, the calculation unit 12 can calculate the predicted value (the distance and the direction) of a detection result of each of the landmarks at the time t. The calculation unit 12 compares the predicted value of the distance and the direction of each of the landmarks with an actual measurement value of a distance and a direction of the object detected by the scanning in S104 so as to identify a corresponding relationship between each of the objects detected in the scanning in S104 and the landmark.

Further, the calculation unit 12 can correct the probability distribution of the estimation position of the own vehicle by determining the corresponding relationship between the object detected by the scanning in S104 and the landmark. Specifically, the calculation unit 12 compares the predicted value and the actual measurement value (a scanning result in S104) for each of the landmarks and calculates a difference value, based on the identified corresponding relationship. The difference value indicates a deviation between the probability distribution (a theoretical value) of the estimation position of the own vehicle calculated by using the probability distribution of the estimation position of the own vehicle at the time t-1, the control information of the vehicle, and the predetermined noise parameter and the position (the actual measurement value) of the own vehicle determined by the measurement result (the distance and the direction to each of the landmarks) of the scanning apparatus 30. The calculation unit 12 can correct the deviation of the theoretically derived probability distribution by using the calculated difference value as a parameter. Note that, in a case where a landmark used for position estimation of the vehicle is defined in advance among the landmarks installed on a road, the calculation unit 12 may calculate a probability distribution of an estimation position of the own vehicle by narrowing down information required for a process from the information on the distance and the direction to each of the landmarks obtained by the process in S104.

### <<Calculation Example of Probability Distribution Using GPS Information and Detection Result of Landmark>>

First, the calculation unit 12 calculates a probability distribution of an estimation position of an own vehicle at the time t by using a probability distribution of an estimation position of the own vehicle at the time t-1, in the same manner as the example described above.

The calculation unit 12 searches map data based on GPS information obtained in S102, and specifies an area corresponding to the GPS information on map data. The calculation unit 12 obtains landmark information which exists within the specified area, from the map data.

The calculation unit 12 estimates a predicted value of a distance and a direction of each of landmarks detected by the scanning of the scanning apparatus 30 at the time t by further using position information of each of the landmarks included in the map data. For example, the calculation unit 12 converts the position information of the GPS information obtained in S102 into position information on the map data. By using the converted position information and the position information of each of the landmarks included in the map data, the calculation unit 12 can calculate a predicted value (a distance and a direction) of a detection result of each of the landmarks at the time t. The calculation unit 12 identifies a corresponding relationship between each of the objects detected in the scanning in S104 and the landmark, based on similarity to the predicted value of the distance and the direction of each of the landmarks.

The calculation unit 12 compares the predicted value and the actual measurement value (a scanning result in S104) for each of the landmarks and calculates a difference value based on the identified corresponding relationship so as to correct a deviation of the theoretically derived probability distribution by using the calculated difference value as a parameter. Note that, in a case where a landmark used for position estimation of the vehicle is defined in advance among the landmarks installed on a road, the calculation unit 12 may calculate a probability distribution of an estimation position of the own vehicle by narrowing down information required for a process from the information on the distance and the direction to each of the landmarks obtained by the process in S104.

Returning to Fig. 3, the process execution unit 14 obtains the probability distribution of the position of the own vehicle calculated by the calculation unit 12, and determines whether or not accuracy of the estimation position based on the probability distribution satisfies a reference (S108). For example, based on the probability distribution, the process execution unit 14 obtains a variance, a standard deviation, a probability corresponding to a position indicating a mode of distribution, and the like. The process execution unit 14 determines whether or not the reference for the accuracy of the estimation position is satisfied, that is, "a variance or a standard deviation is smaller than a predetermined threshold" or "a probability corresponding to a position indicating a mode of distribution is larger than a predetermined threshold", for example.

In a case where the accuracy of the estimation position does not satisfy the reference (YES in S108), the process execution unit 14 executes at least one predetermined process for improving the accuracy of the estimation position to be described below (S110). On the other hand, in a case where the accuracy of the estimation position does not satisfy the reference (YES in S108), the process execution unit 14 terminates the process without executing a predetermined process to be described below.

### <<First Predetermined Process>>

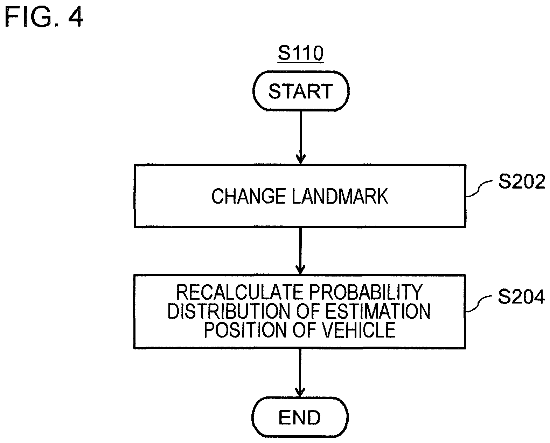

Fig. 4 is a flowchart illustrating a flow of a first predetermined process.

The process execution unit 14 changes the landmark used for position estimation of the own vehicle (S202). For example, the process execution unit 14 newly adds another landmark included in the map data, which is not used when the calculation unit 12 calculates the probability distribution of the estimation position of the vehicle. Further, for example, the process execution unit 14 may replace at least one of the landmarks used when the calculation unit 12 calculates the probability distribution of the estimation position of the vehicle with another landmark included in the map data.

In addition, the process execution unit 14 instructs the calculation unit 12 to recalculate a probability distribution of the estimation position of the vehicle. According to the instruction from the process execution unit 14, the calculation unit 12 recalculates the probability distribution of the estimation position of the vehicle by using position information of a landmark after the change and the scanning result of the scanning apparatus 30 in S104 (S204).

In this manner, by changing a combination of landmarks used to estimate the position of the vehicle (adding a new landmark), it is possible to estimate the position of the vehicle with higher accuracy.

### <<Second Predetermined Process>>

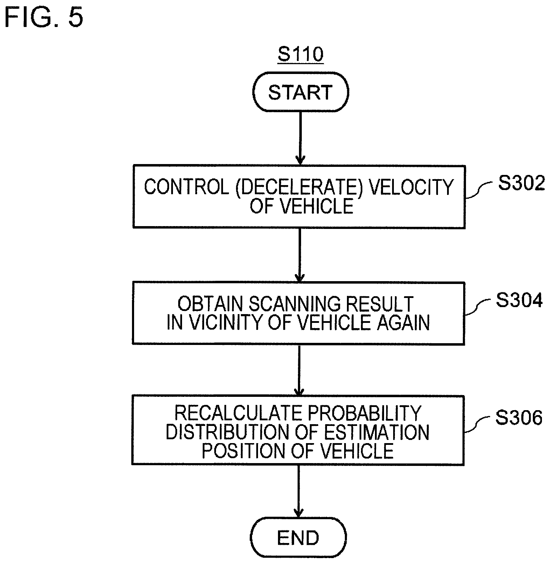

Fig. 5 is a flowchart illustrating a flow of a second predetermined process.

First, the process execution unit 14 transmits an instruction to control velocity of the vehicle (an instruction to decelerate the vehicle) to the ECU 40 through the CAN (S302) . The ECU 40 decelerates the vehicle according to the instruction from the process execution unit 14. Note that, in order to prevent a driver from being confused due to an unintended operation of the vehicle, the process execution unit 14 preferably outputs an audio message indicating that the vehicle is decelerated to improve accuracy of a position estimation process of the vehicle, to a speaker or a display. In addition, by decelerating, an effect of improving safety of an autonomous driving vehicle having position information is unstable can also be expected.

Further, the process execution unit 14 obtains a scanning result generated by the scanning apparatus 30 after the vehicle decelerates, and instructs the calculation unit 12 to recalculate a probability distribution of the estimation position of the vehicle. For example, the calculation unit 12 obtains the scanning result in a vicinity of the vehicle by the scanning apparatus 30 again at a timing when the deceleration control is continued for a predetermined time by the ECU 40 (S304). The calculation unit 12 recalculates the probability distribution of the estimation position of the vehicle by using the scanning result of the scanning apparatus 30 obtained again (S306).

By reducing moving velocity of the vehicle, the scanning apparatus 30 can easily detect a landmark which exists in the vicinity of the vehicle. As a result, an effect of improving accuracy of position estimation of the vehicle using the scanning result of the scanning apparatus 30 can be expected. In addition, by decelerating, an effect of improving safety of an autonomous driving vehicle having position information is unstable can also be expected.

Note that, the process execution unit 14 may redetermine accuracy of the estimation position based on the recalculated probability distribution of the estimation position of the vehicle. Note that, in a case where the accuracy of the estimation position based on the recalculated probability distribution is less than a reference, the process execution unit 14 may further reduce velocity of the vehicle until the velocity of the vehicle reaches a predetermined lower limit velocity. Alternatively, the process execution unit 14 can further execute at least one of the predetermined processes illustrated in Figs. 4, 6 and 7.

### <<Third Predetermined Process>>

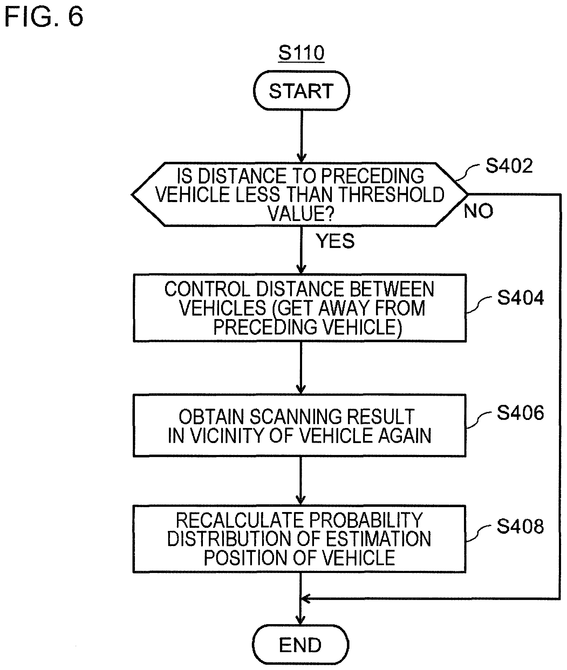

Fig. 6 is a flowchart illustrating a flow of a third predetermined process.

First, the process execution unit 14 determines whether or not a distance to a preceding vehicle is less than a predetermined threshold value (S402). The distance to the preceding vehicle can be calculated, for example, from the scanning result of the scanning apparatus 30. In addition, the set threshold value related to a vehicle-to-vehicle distance is a distance which can sufficiently secure a scanning range of the scanning apparatus 30. The threshold value can be set to an appropriate value by, for example, a test drive in advance or the like.

In a case where the distance to the preceding vehicle is equal to or larger than the predetermined threshold value (NO in S402), the process execution unit 14 terminates the process without executing the process described above. On the other hand, in a case where the distance to the preceding vehicle is less than the predetermined threshold value (YES in S402), an instruction of controlling the vehicle-to-vehicle distance to the predetermined threshold is transmitted to the ECU 40 through the CAN (S404). The ECU 40 controls the operation of the vehicle according to the instruction from the process execution unit 14 and controls the vehicle-to-vehicle distance with the preceding vehicle to be a distance of the predetermined threshold value. Note that, in order to prevent a driver from being confused due to an unintended operation of the vehicle, the process execution unit 14 preferably outputs an audio message indicating that the vehicle-to-vehicle distance is controlled to improve accuracy of a position estimation process of the vehicle, to a speaker or a display. In addition, by increasing the vehicle-to-vehicle distance, an effect of improving safety of an autonomous driving vehicle having position information is unstable can also be expected.

Further, the process execution unit 14 obtains a scanning result generated by the scanning apparatus 30 after the vehicle-to-vehicle distance is controlled, and instructs the calculation unit 12 to recalculate a probability distribution of the estimation position of the vehicle. For example, when receiving a completion notification of controlling the vehicle-to-vehicle distance from the ECU 40, the calculation unit 12 obtains the scanning result in the vicinity of the vehicle by the scanning apparatus 30 again (S406). The calculation unit 12 recalculates the probability distribution of the estimation position of the vehicle by using the scanning result of the scanning apparatus 30 obtained again (S408).

By having a sufficient distance to the preceding vehicle, a range blocked by the preceding vehicle is reduced and the scanning range of the scanning apparatus 30 is expanded. Accordingly, the scanning apparatus 30 can easily detect a landmark which exists in the vicinity of the vehicle. As a result, an effect of improving accuracy of position estimation of the vehicle using the scanning result of the scanning apparatus 30 can be expected. In addition, by increasing the vehicle-to-vehicle distance, an effect of improving safety of an autonomous driving vehicle having position information is unstable can also be expected.

Note that, the process execution unit 14 may redetermine accuracy of the estimation position based on the recalculated probability distribution of the estimation position of the vehicle. Note that, in a case where accuracy of the estimation position based on the recalculated probability distribution is less than the predetermined reference value, the process execution unit 14 can further execute at least one of the predetermined processes illustrated in Figs. 4, 5 and 7.

### <<Fourth Predetermined Process>>

Although the position estimation process using the landmark is described above, position estimation using a feature value when dividing a three-dimensional space in a vicinity of a road into a specific block width (a voxel size) is proposed. This is called a normal distributions transform (NDT) algorithm, which has an advantage that computational complexity and a reference data storage amount are low. In the NDT algorithm, as a block width is smaller, position accuracy is improved, but the data storage amount is increased. Therefore, in a case where the position accuracy can be ensured, it is desirable that the block width be large.

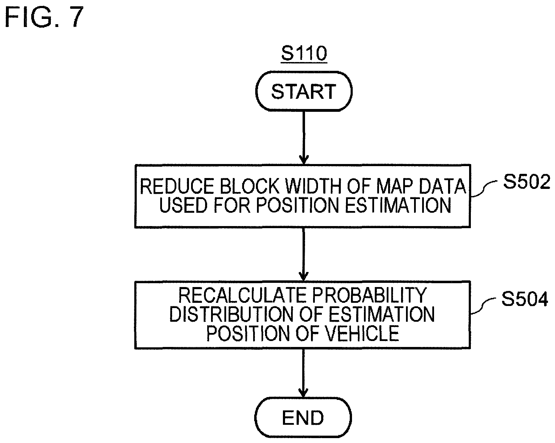

Note that, in an environment such as a server apparatus (not illustrated) in which the data storage amount is not a problem, it is possible to store a plurality of pieces of map data having different block widths. Hereinafter, an example of a process in a case where pieces of map data having different block widths are read from the server device (not illustrated) and are used for position estimation of the vehicle will be described by using Fig. 7.

Fig. 7 is a flowchart illustrating a flow of a fourth predetermined process.

The process execution unit 14 instructs the calculation unit 12 to recalculate a probability distribution of an estimation position of the vehicle by reducing a block width of map data used for the position estimation. The calculation unit 12 reduces the block width of the map data used for the position estimation according to the instruction of the process execution unit 14 (S502). Specifically, among a plurality of pieces of map data having different block widths stored in a server apparatus (not illustrated), the calculation unit 12 reads map data having a block width smaller (for example, smaller by one step) than map data used in the previous position estimation, as map data to be used for re-estimation of the vehicle position. The calculation unit 12 recalculates a probability distribution of the estimation position of the vehicle based on the map data in which the block width is reduced (S504).

As described above, in the NDT algorithm, as a block width is smaller, accuracy of position estimation is improved. In this manner, by narrowing down a range in which a landmark as a reference at a time of position estimation exists, an effect of improving accuracy of the position estimation of the vehicle using the scanning result of the scanning apparatus 30 can be expected.

Note that, the process execution unit 14 may redetermine accuracy of the estimation position based on the recalculated probability distribution of the estimation position of the vehicle. Note that, in a case where accuracy of the estimation position based on the recalculated probability distribution is less than the predetermined reference value, the process execution unit 14 can further execute at least one of the predetermined processes illustrated in Figs. 4, 5 and 6.

### <Second Operation Example>

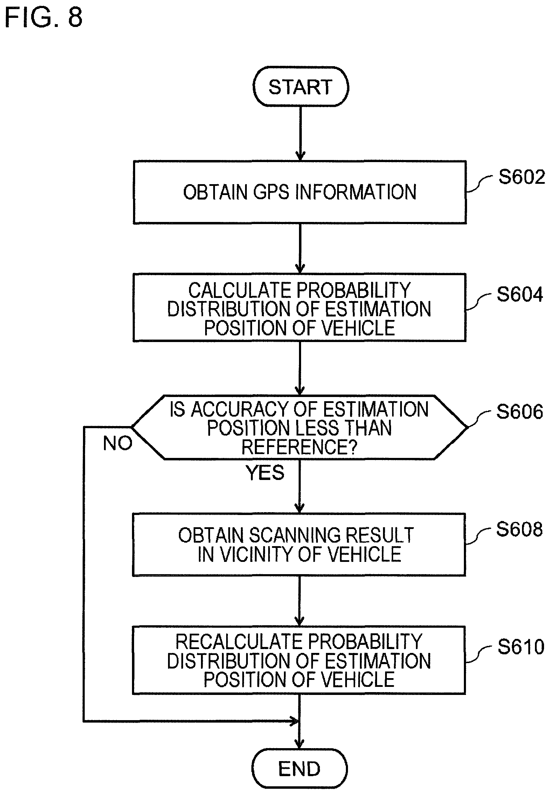

Fig. 8 is a flowchart illustrating a second example of the operation of the information processing apparatus 10. Here, an example in which the information processing apparatus 10 estimates a position of a vehicle by mainly using GPS information is described.

First, the GPS module 1101 receives GPS signals from a plurality of satellites, and generates position information (GPS information) based on the received GPS signals. The calculation unit 12 obtains the GPS information generated by the GPS module 1101 (S602).

The calculation unit 12 calculates a probability distribution of an estimation position of the vehicle by using the GPS information (S604). For example, the calculation unit 12 can determine a position indicated by the GPS information, as the estimation position of the own vehicle.

The process execution unit 14 obtains the probability distribution of the position of the own vehicle calculated by the calculation unit 12, and determines whether or not accuracy of the estimation position based on the probability distribution satisfies a reference (S606). For example, based on the probability distribution, the process execution unit 14 obtains a variance, a standard deviation, a probability corresponding to a position indicating a mode, and the like. The process execution unit 14 determines whether or not the reference for the accuracy of the estimation position is satisfied, that is, "a variance or a standard deviation is smaller than a predetermined threshold" or "a probability corresponding to a position indicating a mode of distribution is larger than a predetermined threshold", for example.

Here, for example, accuracy of GPS information exists in a reception status (for example, arrangement of satellites transmitting GPS signals and the number of GPS signals received from each of the satellites) of a GPS signal, receive sensitivity of the GPS signal, or the like. For example, as the reception state and the reception sensitivity deteriorate, an error included in GPS information generated based on the GPS signal increases. Then, the GPS information is generated as position information having a certain error range. In this case, the calculation unit 12 can regard a probability distribution in the error range of the GPS information as a predetermined distribution model such as a uniform distribution. Further, in this case, as the error range of the GPS information is wide, the variance or the standard deviation of the probability distribution is large, and certainty in a case where any position in the range is selected as the estimation position of the vehicle also decreases.

In a case where accuracy of the estimation position does not satisfy a reference (YES in S606), the process execution unit 14 obtains a scanning result generated by the scanning apparatus 30 as described in S104, and instructs the calculation unit 12 to recalculate a probability distribution of the estimation position of the vehicle. According to the instruction from the process execution unit 14, the calculation unit 12 obtains the scanning result from the scanning apparatus 30 (S608). As described by using Fig. 3, the calculation unit 12 recalculates the probability distribution of the estimation position of the vehicle by using the scanning result of the scanning apparatus 30 (S610).

Accordingly, in a case where the accuracy of the position estimation based on the GPS information is low, it is possible to estimate the position of the vehicle with higher accuracy by using information of a landmark in a vicinity of the vehicle.

Note that, the process execution unit 14 may redetermine accuracy of the estimation position based on the recalculated probability distribution of the estimation position of the vehicle. Note that, in a case where accuracy of the estimation position based on the recalculated probability distribution is less than the predetermined reference value, the process execution unit 14 can execute at least one of the predetermined processes illustrated in Figs. 4 to 7. On the other hand, in a case where the accuracy of the estimation position does not satisfy the reference (YES in S108), the process execution unit 14 terminates the process without executing the process described above.

### [Second Embodiment]

### (System Configuration Example)

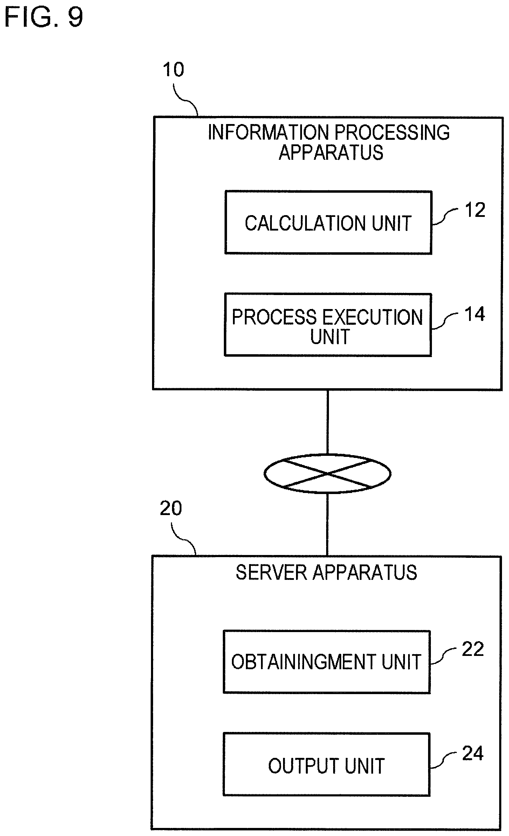

Fig. 9 is a block diagram illustrating a configuration example of an information processing system 1 according to a second example embodiment. The information processing system 1 is configured to include the information processing apparatus 10 and a server apparatus 20. In the same manner as the first example embodiment, the information processing apparatus 10 is an apparatus disposed in a vehicle. In addition, the server apparatus 20 is an apparatus capable of communicating with the information processing apparatus 10 disposed in each of vehicles. For convenience of explanation, although Fig. 1 illustrates the information processing system 1 including one information processing apparatus 10 and one server apparatus 20, the information processing system 1 may include a plurality of information processing apparatuses 10 and/or a plurality of server apparatuses 20.

### <Functional Configuration of Information Processing Apparatus 10>

The process execution unit 14 of the present example embodiment executes a process of outputting information (Hereinafter, also described as "first information") including position information of a position at which accuracy of an estimation position of a vehicle based on a probability distribution calculated by the calculation unit 12 is lower than a predetermined reference. The process execution unit 14 can obtain, for example, the position information of the vehicle when it is determined that "accuracy of an estimation position of a vehicle is lower than a predetermined reference" in the determination of S108, from 1101 of the GPS module and can include the position information in the first information. In addition, for example, in a case where "accuracy of an estimation position of a vehicle is lower than a predetermined reference" in the determination of S108, the process execution unit 14 can specify a position having the highest probability based on the probability distribution of the estimation position of the vehicle calculated by the calculation unit 12 and can include the position information in the first information.

### <Functional Configuration of Server Apparatus 20>

The server apparatus 20 includes an obtaining unit 22 and an output unit 24. The obtaining unit 22 obtains first information including position information of a position at which accuracy of an estimation position of a vehicle is lower than a predetermined reference, from the information processing apparatus 10 disposed in the vehicle. The obtaining unit 22 accumulates the obtained first information in a predetermined storage unit (for example, the storage device 208 or the like of the server apparatus 20). The output unit 24 outputs information indicating a position at which an obtainment frequency (for example, the accumulative number of times the first information is obtained, the number of times the first information is obtained per unit time, or the like) of the first information is equal to or higher than a reference by using the position information included in the first information accumulated in the predetermined storage unit. As an example, the output unit 24 can count the number of times the position information is obtained for each of positions indicated by the position information of the first information or for each of areas including the position, and can display information indicating the position or the area having a count number is equal to or more than a predetermined threshold value to a display apparatus or the like.

### (Hardware Configuration)

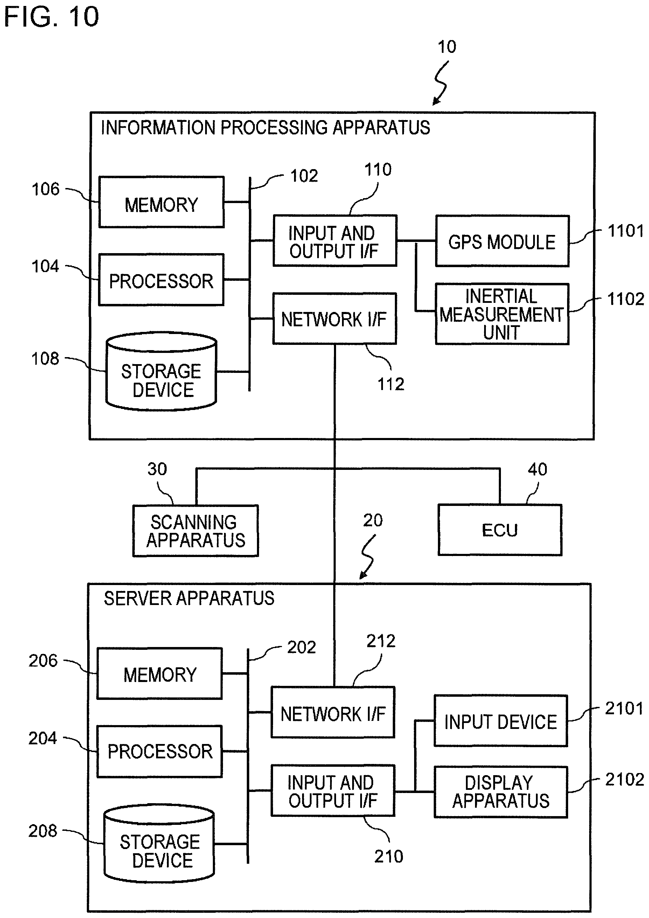

A hardware configuration example of the information processing apparatus 10 and the server apparatus 20 will be described by using Fig. 10. Fig. 10 is a diagram illustrating a hardware configuration of the information processing apparatus 10 and the server apparatus 20. Each of functional configuration units of the information processing apparatus 10 and the server apparatus 20 may be realized by hardware (for example, hard-wired electronic circuit or the like) which realizes each of the functional configuration units or may be realized by a combination (for example, a combination of the electronic circuit and a program controlling the electronic circuit or the like) of hardware and software. Note that, the information processing apparatus 10 has the same hardware configuration as the first example embodiment. Hereinafter, a case where each of the functional configuration units of the server apparatus 20 is realized by a combination of hardware and software will be mainly described.

### <Hardware Configuration Example of Server Apparatus 20>

The server apparatus 20 includes a bus 202, a processor 204, a memory 206, a storage device 208, an input and output interface 210, and a network interface 212. The bus 202 is a data transmission line through which the processor 204, the memory 206, the storage device 208, the input and output interface 210, and the network interface 212 mutually transmit and receive data. However, a method of connecting the processors 204 and the like to each other is not limited to bus connection. The processor 204 is an arithmetic processing unit realized by using a microprocessor or the like. The memory 206 is a memory realized by using a random access memory (RAM) or the like. The storage device 208 is a storage device realized by using a read only memory (ROM), a flash memory, or the like.

The input and output interface 210 is an interface for connecting the server apparatus 20 to a peripheral apparatus. For example, an input apparatus 2101 such as a keyboard or a mouse, a display apparatus 2102 such as a liquid crystal display (LCD), a touch panel in which the input apparatus 2101 and the display apparatus 2102 are integrated, and the like are connected to the input and output interface 210.

The network interface 212 is an interface for connecting the server apparatus 20 to a communications network. For example, the server apparatus 20 includes the network interface 212 for connecting to a wide area network (WAN) communication network. For example, the server apparatus 20 communicates with the information processing apparatus 10 disposed in a vehicle through a WAN communication network so as to obtain first information.

The storage device 208 stores a program module which realizes each of the functional configuration units of the server apparatus 20. By reading the program module into the memory 206 and executing the program module, the processor 204 realizes a function of each of the functional configuration units of the server apparatus 20.

### (Operation Example)

Hereinafter, a specific operation example of the information processing apparatus 10 and the server apparatus 20 will be described with reference to the drawings.

### <First Operation Example of Information Processing Apparatus 10>

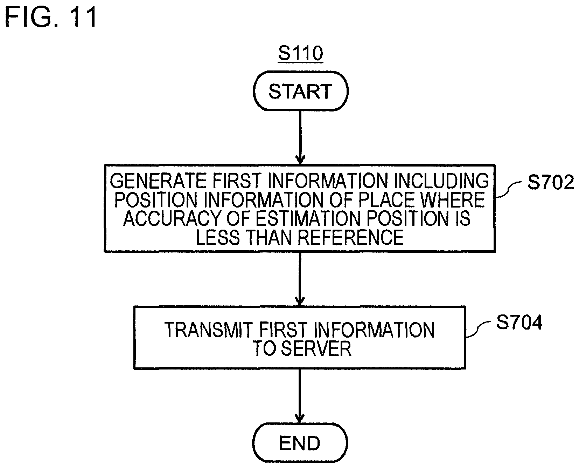

Fig. 11 is a flowchart illustrating a first example of an operation of the information processing apparatus 10 according to the second example embodiment. The process in Fig. 11 is executed as the predetermined process in S110 of the flowchart of Fig. 3.

The process execution unit 14 generates first information including position information indicating a position at which accuracy of an estimation position is less than a reference (S702) . For example, the process execution unit 14 can obtain, for example, position information of a vehicle when it is determined that "accuracy of an estimation position of a vehicle is lower than a predetermined reference" in the determination of S108, from 1101 of the GPS module. In addition, for example, in a case where "accuracy of an estimation position of a vehicle is lower than a predetermined reference" in the determination of S108, the process execution unit 14 can specify and obtain a position having the highest probability based on the probability distribution of the estimation position of the vehicle calculated by the calculation unit 12. The process execution unit 14 includes the position information obtained as described above in the first information, and transmits the first information to the server apparatus 20 (S704) . At this time, the process execution unit 14 further includes information indicating the date and time when the accuracy of the estimation position of the vehicle becomes lower than the predetermined reference, in the first information, and transmits the information to the server apparatus 20.

### <Second Operation Example of Information Processing Apparatus 10>

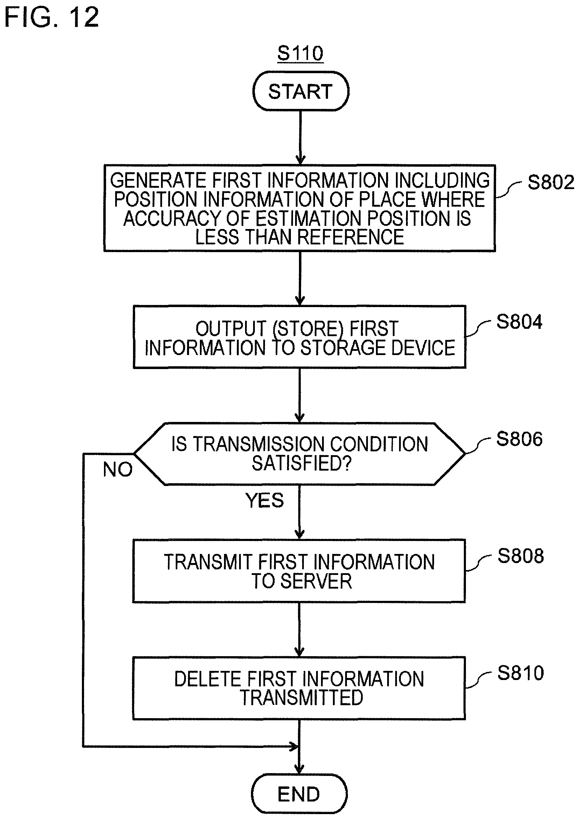

Fig. 12 is a flowchart illustrating a second example of the operation of the information processing apparatus 10 according to the second example embodiment. The present operation example is different from the process in Fig. 11 in that the first information is temporarily stored (output) in a storage apparatus (for example, the storage device 108 or the like) of the information processing apparatus 10, and in a case where a predetermined transmission condition is satisfied, the first information stored in the storage apparatus is collectively transmitted to the server apparatus 20. The process in Fig. 12 is executed as the predetermined process in S110 of the flowchart of Fig. 3.

The process execution unit 14 generates first information including position information indicating a position at which accuracy of an estimation position is less than a reference (S802). For example, the process execution unit 14 can obtain, for example, position information of a vehicle when it is determined that "accuracy of an estimation position of a vehicle is lower than a predetermined reference" in the determination of S108, from 1101 of the GPS module. In addition, for example, the process execution unit 14 can specify and obtain a position having the highest probability based on the probability distribution of the estimation position of the vehicle calculated by the calculation unit 12. The process execution unit 14 includes the position information obtained as described above in the first information, and outputs the first information to a storage apparatus (for example, the storage device 108 or the like) of the information processing apparatus 10 (S804).

After then, the process execution unit 14 determines whether or not a transmission condition of the first information stored in the storage apparatus is satisfied (S806). The transmission condition is, for example, a case where the number of non-transmitted first information stored in the storage apparatus of the information processing apparatus 10 reaches a predetermined number, a case where a current time reaches a scheduled transmission time, or the like.

In a case where the transmission condition is not satisfied (NO in S806), the process execution unit 14 does not execute a process to be described below. Note that, in a case where the transmission condition is satisfied later, the process execution unit 14 executes the process to be described below.

In a case where the transmission condition is satisfied (YES in S806), the process execution unit 14 reads the non-transmitted first information stored in the storage apparatus and transmits the read first information to the server apparatus 20 (S808). The process execution unit 14 deletes the first information transmitted in S808 from the storage apparatus (S810) . In detail, the process execution unit 14 deletes the transmitted first information from the storage apparatus in response to receiving a checking signal indicating that the first information is normally received, from the server apparatus 20. The process execution unit 14 may delete a record of the first information itself, or may logically delete the first information by attaching a deletion flag to the first information. In addition, the process execution unit 14 may add a flag to the transmitted first information, and delete the information to which the flag is added by a periodically executed batch process. Further, the process execution unit 14 may be configured to retransmit the first information in a case of receiving a signal indicating a reception error from the server apparatus 20.

### <Operation Example of Server Apparatus 20>

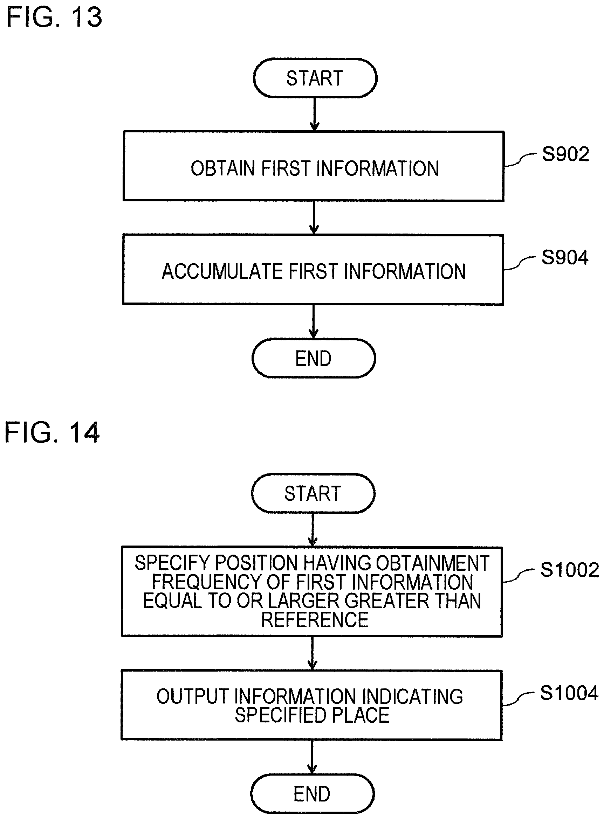

A specific operation of the server apparatus 20 will be described with reference to Figs. 13 and 14. Figs. 13 and 14 are flowcharts illustrating an example of the operation of the server apparatus 20. The example in Fig. 13 illustrates an accumulation process (S902 and S904) of first information. In addition, the example in Fig. 14 illustrates an analysis process (S1002 and S1004) using the first information.

First, the accumulation process of the first information will be described with reference to Fig. 13.

The obtaining unit 22 obtains first information from the information processing apparatus 10 (S902). The obtaining unit 22 accumulates the first information received in S202 in a predetermined storage unit (for example, the storage device 208 or the like of the server apparatus 20) (S904).

Next, an example of the analysis process using the first information will be described with reference to Fig. 14.

The analysis process using the first information is executed, for example, in response to an analysis request from the server apparatus 20 or another apparatus connected to the server apparatus 20. Here, a case of receiving the analysis request through the input apparatus 2101 (a keyboard or a touch panel) connected to the input and output interface 210 of the server apparatus 20 is described.

The output unit 24 refers to position information of each of pieces of first information stored in a predetermined storage unit (for example, the storage device 208 or the like of the server apparatus 20) in response to the analysis request, and specifies a position having an obtainment frequency of the first information equal to or larger than a reference (S1002).

As an example, the output unit 24 can specify a position at which the obtainment frequency of the first information is equal to or larger than the reference as follows. First, the output unit 24 counts the number of times the first information is obtained in position units indicated by position information of the first information. The output unit 24 compares a value counted in position units with a reference threshold value defined in a program module or the like which realizes a function of the output unit 24 so as to determine that a position exceeding the reference threshold value is "a position at which an obtainment frequency of first information is equal to or larger than a reference". Note that, in this case, the output unit 24 may count the number of pieces of the first information in area units defined by using three pieces or more of position information. As another example, in a case where information indicating a time when the first information is generated is included, the output unit 24 calculates an obtainment frequency of the first information per unit time (for example, one year unit, one month unit, one week, or the like) based on the time information. By comparing the obtainment frequency of the first information per unit time with a reference threshold value, the output unit 24 can also specify "a position at which an obtainment frequency of first information is equal to or larger than a reference". In addition, the output unit 24 can calculate an obtainment frequency of the first information in a specific time zone (for example, 8:00 to 10:00 on weekdays). By comparing the obtainment frequency with a time zone other than the specific time zone, the output unit 24 can specify "a position at which an obtainment frequency of first information is equal to or larger than a reference".

The output unit 24 outputs information indicating "a position at which an obtainment frequency of first information is equal to or larger than a reference" specified in the process of S1002 (S1004) . For example, the output unit 24 can output map data in which position information of the position specified in S1002 is converted into a position on the map data and plotted, to the display apparatus 2102 connected to the server apparatus 20.

In this manner, in the present example embodiment, the server apparatus 20 collects first information (first information including position information of a position at which accuracy of a position estimation is less than a reference) on autonomous driving from the information processing apparatus 10 of each of vehicles and accumulates the first information in a predetermined storage apparatus. The first information group stored in the predetermined storage apparatus is useful information indicating a position at which an event in which accuracy of a position estimation process of the own vehicle decreases frequently occurs. By outputting the information indicating the position to the display apparatus 2102 or the like connected to the server apparatus 20, a road administrator can easily recognize a position at which it is necessary to take a measure for improving the accuracy of the position estimation. For example, the road manager can take a measure of adjusting or adding a new landmark to the corresponding position so as to improve the accuracy of the position estimation. Further, for example, in a case where the NDT algorithm is used for the position estimation, the road administrator adds, for example, map data for the NDT algorithm having a smaller block width to the server apparatus 20 so as to take a measure for improving the accuracy of the position estimation.

In addition, as another example, in a case where date information indicating a date when the first information is generated is included, the output unit 24 calculates an obtainment frequency of first information for each day based on the date information, and compares the obtainment frequency with a reference threshold value so as to specify "a position at which an obtainment frequency of first information is equal to or larger than a reference". Further, the output unit 24 can calculate an obtainment frequency of first information in a specific period (for example, a first week of May) . By comparing the obtainment frequency with a period other than the specific period, the output unit 24 can specify "a position at which an obtainment frequency of first information is equal to or larger than a reference".

For example, in a case of using a tree having many leaves in summer or a few leaves in winter, or a sign which is easily hidden in a shade of trees in summer as a landmark for position estimation, there is a position at which map data for the NDT algorithm needs to be seasonally changed. In the present example embodiment, by specifying a position having an obtainment frequency of first information during a specific period equal to or larger than a reference, for example, the road administrator can determine a position at which map data needs to be switched according to seasons and a position at which map data may not be switched.

### (Modification Example of Second Example Embodiment)

Hereinafter, an operation of a modification example of the second example embodiment will be described.

### <Functional Configuration of Information Processing Apparatus 10>

When outputting first information, the process execution unit 14 may further obtain at least one of individual information or vehicle type information of a vehicle in which the information processing apparatus 10 is disposed, and may output the individual information or the vehicle type information in association with the first information. Here, an example of "individual information of a vehicle" includes information capable of specifying each individual such as a manufacturing number (a serial number) of the vehicle. Further, "vehicle type information of a vehicle" includes information such as a product name and a product model number of the vehicle.

### <Functional Configuration of Server Apparatus 20>

The obtaining unit 22 obtains first information further including at least one of individual information and vehicle type information of a vehicle, and accumulates the first information in a predetermined storage apparatus (such as the storage device 208 or the like of the server apparatus 20).

The output unit 24 can calculate a generation frequency of the first information for each vehicle type identified by the vehicle type information by using the first information group including the vehicle type information of the vehicle. The output unit 24 compares the generation frequency of the first information calculated for each of vehicle types with a reference threshold value defined in a program module or the like which realizes a function of the output unit 24 so as to specify a vehicle type exceeding the reference threshold value. The output unit 24 outputs information indicating the specified vehicle type to, for example, the display apparatus 2102 or the like of the server apparatus 20.

Accordingly, a group or the like operating the server apparatus 20 can grasp a type of the vehicle in which accuracy of the position estimation process of the vehicle frequently decreases, and can provide the information to a manufacturer or the like.

In addition, the output unit 24 can calculate an obtainment frequency of first information for each individual (a specific vehicle) identified by individual information by using the first information group including the individual information of the vehicle. The output unit 24 compares the generation frequency of the first information calculated for each individual with a reference threshold value defined in a program module or the like which realizes a function of the output unit 24 so as to specify an individual exceeding the reference threshold value. Further, the output unit 24 can output a notification message to a user apparatus associated with the specified individual. Specifically, the output unit 24 reads, for example, a destination address of the user apparatus registered in advance in association with the individual information of each vehicle in the storage device 208 or the like by using individual identification information of the specified individual as a key. The output unit 24 generates a notification message. Here, the notification message is, for example, a prompting message for checking an installation position or a direction of the scanning apparatus 30, a message for warning a possibility of hardware abnormality (for example, lens dirt, a failure of various sensors, or the like) of the scanning apparatus 30, or the like. The output unit 24 sets the read destination address as a destination of the generated notification message, and transmits the notification message to a user apparatus corresponding to the destination address.

By transmitting the message notified in this way to the user destination, the user can be guided to perform maintenance on the scanning apparatus 30. Accordingly, an effect of eliminating the problem that the accuracy of the position estimation process of the vehicle decreases due to the defect of the scanning apparatus 30 can be expected.

### (Modification Example 2 of Second Example Embodiment)

Hereinafter, an operation of another modification example of the second example embodiment will be described.

### <Functional Configuration of Information Processing Apparatus 10>

When outputting first information, the process execution unit 14 may further obtain weather information in a vicinity of a vehicle in which the information processing apparatus 10 is disposed, and may output the weather information in association with the first information. Here, the weather information is information obtained from weather information corresponding to the vicinity of a current position of the vehicle from a weather information server (not illustrated) or the like. The weather information includes at least one of weather, a wind direction, wind, precipitation, snowfall, snow cover, and a temperature when accuracy of a position estimation is less than a reference.

### <Functional Configuration of Server Apparatus 20>

The obtaining unit 22 obtains first information further including weather information in a vicinity of a vehicle, and accumulates the first information in a predetermined storage apparatus (such as the storage device 208 or the like of the server apparatus 20).

The output unit 24 can calculate a generation frequency of the first information for each weather condition identified by the weather information by using the first information group including the weather information. The output unit 24 compares the generation frequency of the first information calculated for each weather condition with a reference threshold value defined in a program module or the like which realizes a function of the output unit 24 so as to specify a weather condition exceeding the reference threshold value. In addition, the output unit 24 outputs information indicating a position at which the obtainment frequency of the first information for each weather is equal to or larger than the reference threshold value to, for example, the display apparatus 2102 or the like of the server apparatus 20.

For example, in some cases, the accuracy of the position estimation may be reduced by recognition accuracy of a landmark being temporarily reduced due to conditions of a sunset situation, heavy rain, fog, and the like. In this respect, in the present modification example, the output unit 24 outputs the information or the like indicating the position at which the obtainment frequency of the first information for each weather is equal to or larger than the reference threshold value. Accordingly, for example, information on the position requiring continuous attention for autonomous driving in the current weather can be provided to a driver of the vehicle.

### (Modification Example 3 of Second Example Embodiment)

Hereinafter, an operation of another modification example of the second example embodiment will be described.

### <Functional Configuration of Information Processing Apparatus 10>

When outputting first information, the process execution unit 14 may further obtain sensor information related to an external sensor mounted on a vehicle in which the information processing apparatus 10 is disposed, and may output the sensor information in association with the first information. Here, the sensor information includes information (for example, information indicating a detection range or resolution of the sensor, information indicating a type or a model number of the sensor, or the like) on a type, an age or a performance of the external sensor.

### <Functional Configuration of Server Apparatus 20>

The obtaining unit 22 obtains first information further including sensor information related to an external sensor mounted on a vehicle, and accumulates the first information in a predetermined storage apparatus (such as the storage device 208 or the like of the server apparatus 20).

The output unit 24 can calculate a generation frequency of the first information for each type, age or performance of the external sensor identified by the sensor information by using the first information group including the sensor information. The output unit 24 compares the generation frequency of the first information calculated for each type, age or performance of the external sensor with a reference threshold value defined in a program module or the like which realizes a function of the output unit 24 so as to specify a type, age or performance of the external sensor exceeding the reference threshold value. In addition, the output unit 24 outputs information indicating a position at which the obtainment frequency of the first information for each type, age or performance of the external sensor is equal to or larger than the reference threshold value to, for example, the display apparatus 2102 or the like of the server apparatus 20.

For example, only for a specific type of external sensor, in a case where the obtainment frequency of the first information is equal to or larger than the reference threshold value, it is conceivable that a landmark used for position estimation at the position is not suitable for the specific type of external sensor. In this respect, in the present modification example, the output unit 24 outputs the information or the like indicating the position at which the obtainment frequency of the first information for each type, age or performance of the external sensor is equal to or larger than the reference threshold value. Accordingly, for example, useful information can be provided when the road administrator takes a measure of adjusting or adding a landmark corresponding to the position so as to improve the accuracy of the position estimation.

In the above example, the information processing apparatus 10 generates position information based on positioning information received from GPS satellites. Without being limited to the GPS satellite, the position information may be generated based on positioning information received from a positioning satellite belonging to a global navigation satellite system (GNSS) such as a global navigation satellite system (GLONASS) (registered trademark) satellite, a Galileo (registered trademark) satellite, a quasi-zenith satellite, and the like.

Although the example embodiments and the examples are described with reference to the drawings, these are examples of the present invention, and various other configurations other than the example embodiments and the examples described above may be adopted.

This application claims priority based on Japanese Patent Application No. 2017-016007 filed on January 31, 2017, the disclosure of which is incorporated herein in its entirety.

## Claims

1. An information processing apparatus comprising:
a calculation unit that calculates a probability distribution of an estimation position of a vehicle by using information and map data, the information including at least one of a detection result of a target object in a vicinity of the vehicle, positioning information received from a positioning satellite, and information of an inertial measurement unit (IMU); and
a process execution unit that executes at least one predetermined process in a case where accuracy of the estimation position of the vehicle based on the probability distribution is lower than a predetermined reference.

2. The information processing apparatus according to claim 1,
wherein the process execution unit executes a process of outputting first information including position information of a position at which the accuracy of the estimation position of the vehicle based on the probability distribution is lower than the predetermined reference.

3. The information processing apparatus according to claim 2,
wherein the process execution unit executes a process of outputting first information including date and time information indicating a date and time when the accuracy of the estimation position of the vehicle based on the probability distribution is lower than the predetermined reference.

4. The information processing apparatus according to claim 2,
wherein the process execution unit executes a process of outputting first information including weather information indicating weather in the vicinity of the vehicle when the accuracy of the estimation position of the vehicle based on the probability distribution is lower than the predetermined reference.

5. The information processing apparatus according to any one of claims 2 to 4,
wherein the process execution unit further executes a process of outputting at least any one of individual information of the vehicle or vehicle type information of the vehicle in association with the first information.

6. The information processing apparatus according to any one of claims 2 to 5,
wherein the process execution unit executes a process of outputting first information including sensor information related to an external sensor mounted on the vehicle.

7. The information processing apparatus according to any one of claims 1 to 6,
wherein the process execution unit executes a process of changing the target object to be used for calculation of the probability distribution.

8. The information processing apparatus according to any one of claims 1 to 7,
wherein the process execution unit executes a process of controlling moving velocity of the vehicle or a distance interval between the vehicle and another vehicle in a vicinity.

9. The information processing apparatus according to any one of claims 1 to 8,
wherein the process execution unit executes a process of changing a range of the map data to be used for a position estimation of the vehicle.

10. A server apparatus comprising:
an obtaining unit that obtains first information including position information of a position at which accuracy of an estimation position of a vehicle is lower than a predetermined reference, from an information processing apparatus disposed in the vehicle; and
an output unit that outputs information indicating a position at which an obtainment frequency of the first information is equal to or larger than a reference, by using position information included in the first information.

11. The server apparatus according to claim 10,
wherein the obtaining unit obtains the first information further including date and time information indicating a date and time at which the accuracy of the estimation position of the vehicle is lower than a predetermined reference, and
based on the date and time information, the output unit outputs information indicating a position at which an obtainment frequency of the first information for each day or time zone is equal to or larger than a reference.

12. The server apparatus according to claim 10,
wherein the obtaining unit obtains the first information further including weather information indicating weather in a vicinity of the vehicle when the accuracy of the estimation position of the vehicle is lower than a predetermined reference, and
based on the weather information, the output unit outputs information indicating a position at which an obtainment frequency of the first information for each weather is equal to or larger than a reference.

13. The server apparatus according to any one of claims 10 to 12,
wherein the obtaining unit obtains the first information further including vehicle type information of the vehicle, and
based on an obtainment frequency of the first information calculated for each vehicle type identified by the vehicle type information, the output unit outputs information indicating a vehicle type having the obtainment frequency of the first information which is equal to or larger than a reference.

14. The server apparatus according to any one of claims 10 to 13,
wherein the obtaining unit obtains the first information further including sensor information related to an external sensor mounted on the vehicle, and
based on an obtainment frequency of the first information calculated for each type of the external sensor identified by the sensor information, the output unit outputs information indicating an external sensor type having the obtainment frequency of the first information which is equal to or larger than a reference.

15. The server apparatus according to claim 10,
wherein the obtaining unit obtains the position information further including individual information of the vehicle, and
based on an obtainment frequency of the first information calculated for each vehicle identified by the individual information, the output unit specifies a vehicle having the obtainment frequency of the first information which is equal to or greater than a reference and outputs a notification message to a user apparatus associated with the specified vehicle.

16. An information processing system comprising:
the information processing apparatus according to any one of claims 2 to 6; and
the server apparatus according to any one of claims 10 to 15.

17. An information processing method of a computer, the method comprising:
a step of calculating a probability distribution of an estimation position of a vehicle by using information and map data, the information including at least one of a detection result of a target object in a vicinity of the vehicle, positioning information received from a positioning satellite, and information of an inertial measurement unit (IMU),; and
a step of executing at least one predetermined process in a case where accuracy of the estimation position of the vehicle based on the probability distribution is lower than a predetermined reference.

18. An information processing method of a computer, the method comprising:
a step of obtaining first information including position information of a position at which accuracy of an estimation position of a vehicle is lower than a predetermined reference, from another computer disposed in the vehicle; and
a step of outputting information indicating a position at which an obtainment frequency of the first information is equal to or greater than a reference, by using position information included in the first information.

19. A program causing a computer to function as:
a unit that calculates a probability distribution of an estimation position of a vehicle by using information and map data, the information including at least one of a detection result of a target object in a vicinity of the vehicle, positioning information received from a positioning satellite, and information of an inertial measurement unit (IMU); and
a unit that executes at least one predetermined process in a case where accuracy of the estimation position of the vehicle based on the probability distribution is lower than a predetermined reference.

20. A program causing a computer to function as:
a unit that obtains first information including position information of a position at which accuracy of an estimation position of a vehicle is lower than a predetermined reference, from another computer disposed in the vehicle; and
a unit that outputs information indicating a position at which an obtainment frequency of the first information is equal to or greater than a reference, by using position information included in the first information.
